# EUROPÄISCHE PATENTSCHRIFT

(11) **EP 0 358 067 B1**
(45) Veröffentlichungstag und Bekanntmachung des Hinweises auf die Patenterteilung: **21.12.1994**
(21) Anmeldenummer: 89115753.9
(22) Anmeldetag: 26.08.1989
(51) Int. Cl.: C08F 214/06

(54) **Vinylchloridcopolymerisate**
Vinyl chloride copolymers
Copolymères de chlorure de vinyle

(30) Priorität: 01.09.1988 DE 3829711
(43) Veröffentlichungstag der Anmeldung: 14.03.1990
(73) Patentinhaber: BASF Aktiengesellschaft, 67063 Ludwigshafen (DE)
(72) Erfinder: Bobar, Georg, D-6702 Bad Duerkheim (DE); Krause, Hans-Joachim, Dr., D-6700 Ludwigshafen (DE); Leib, Gernot, D-6710 Frankenthal (DE)

(56) Entgegenhaltungen:
- EP-A- 0 020 159
- DE-A- 1 770 285
- CHEMICAL ABSTRACTS, vol. 76, no. 2, 10 Januar 1972 Columbus, Ohio, USA& JP-A-71 04 832

## Beschreibung

Die Erfindung betrifft Vinylchloridcopolymerisate aus (a) 60 bis 78 Gew.-Teilen Vinylchlorid, (b) 1 bis 20 Gew.-Teilen Glycidylmethacrylat und (c) 12 bis 40 Gew.-Teilen mit (a) und (b) copolymerisierbaren Verbindungen, ausgewählt aus der Gruppe der Acrylsäure- oder Methacrylsäureester, Vinylcarbonsäureester, Vinylether, Vinyllactame, Maleinsäureester oder Fumarsäureester oder Gemischen dieser Monomeren, und mit Viskositätswerten der Copolymerisate - gemessen in 20 gew.-%iger Toluollösung bei 23°C - von 10 bis 100 mPa·s.

Bei derartigen Vinylchloridcopolymerisaten handelt es sich um Produkte, die zur Herstellung von Bindemitteln auf dem Lacksektor verwendet werden können oder zu Pulver verarbeitbar sind. Die Polymerdispersionen enthalten das Polymerisat in sehr fein verteilter Form, wobei Wasser die äußere Phase darstellt. In den Polymerlösungen sind die Polymerisate in einem organischen Lösungsmittel wie Estern, Ketonen oder Alkoholen in völlig homogener Weise aufgenommen.

Vinylchloridcopolymerisate, insbesondere solche für die Anwendung auf dem Lackgebiet, zeigen allgemein eine Tendenz zur Vergilbung. Diese Vergilbung ist eine Funktion von Zeit, Temperatur und Strahlungsintensität.

Man hat eine Reihe von Maßnahmen ergriffen, um diesem Qualitätsmangel abzuhelfen. So sind Substanzen wie epoxidiertes Sojabohnenöl oder Alkalien wie NaOH oder Amine zugesetzt werden, um die Vergilbungstendenz zu verringern.

Abgesehen vom Verdampfen leichter flüchtiger Zusätze, können die höhermolekularen Substanzen, wie Weichmacher, wandern. Ob an die Oberfläche oder in den untergrund, in beiden Fällen wird die der Vergilbung entgegenwirkende Substanz der zu schützenden Schicht entzogen. Alkalizusätze bewirken Qualitätsminderungen wie Filmtrübungen und erhöhte Wasseraufnahme, was sich als "Weißanlaufen" bei der Wasserlagerung der Filme bemerkbar macht.

Es bestand daher die Aufgabe, Bindemittel auf Basis von Vinylchloridcopolymerisaten bereitzustellen, die eine bessere Vergilbungsresistenz als bisher bekannte Bindemittel aufweisen, und bei denen die oben erwähnten Nachteile des "weißanlaufens" bei der Wasserlagerung der Filme nicht auftreten.

Demgemäß wurden die eingangs definierten Vinylchloridcopolymerisate gefunden.

Als bei der Copolymerisation von Vinylchlorid mit Glycidylmethacrylat mit einzupolymerisierende Comonomere (c) sind zu nennen Verbindungen aus der Klasse der Acrylsäure- oder Methacrylsäureester wie Acrylsäurebutylester, Vinylcarbonsäureester wie Vinylpropionat, Vinylether wie Vinylisobutylether, Vinyllactame wie Vinylcaprolactam oder Malein- bzw. Fumarsäureester wie Maleinsäuredimethylester, Maleinsäurediethylester. Besonders bevorzugt ist Vinylisobutylether.

Bevorzugt sind ferner Vinylchloridcopolymerisate, bei denen die copolymerisierbaren Verbindungen (c) aus einer Kombination der oben aufgeführten Verbindungen bestehen.

Polymerdispersionen und -lösungen enthaltend Vinylchloridcopolymerisate und Verfahren zur Herstellung durch Emulsions- bzw. Lösungspolymerisation der Monomeren sind allgemein bekannt, daß sich ausführliche Erläuterungen hierzu erübrigen. In diesem Zusammenhang sind die folgenden Publikationen von Interesse: Ullmanns Encyklopädie der technischen Chemie, Verlag Chemie, Weinheim (1980), 4. Auflage, Band 19, Seiten 344 bis 347, 384 bis 385 und Band 15, Seiten 607 bis 609; Encyclopädia of Polymer Science and Technology, Verlag J. Wiley, New York (1971), Volume 14, Seiten 330 bis 345, B. Vollmert, Grundriß der makromolekularen Chemie, Springer-Verlag (1962), Seiten 72 bis 94 und H. Naidus, "Emulsionspolymerization for paints, Ind. Eng. Chem. 45, (1953), Seiten 712-717. Insbesondere von Interesse ist das in den Patentschriften DE-C-745 424 und EP-A-13 371 beschriebene Verfahren, sowie die EP-A-20 159.

In den Vinylchloridcopolymerisaten sind 60 bis 78 Gew.-Teile Vinylchlorid, 1 bis 20, bevorzugt 2 bis 5 Gew.-Teile Glycidylmethacrylat und 12 bis 40, bevorzugt 20 bis 30 Gew.-Teile copolymerisierbarer Verbindungen (c), ausgewählt aus der Gruppe der Acrylsäure- oder Methacrylsäureester, Vinylcarbonsäureester, Vinylether, Vinyllactame, Maleinsäureester oder Fumarsäureester oder Gemischen dieser Monomeren, einpolymerisiert. Die Viskositätswerte - gemessen in 20 gew.-%iger Toluollösung bei 23°C - betragen 10 bis 100, bevorzugt 12 bis 70 mPa·s, was einem mittleren Molekulargewicht M_{w} von 10⁴ bis 10⁵ bzw. von 2·10⁴ bis 6·10⁴ entspricht. Die Messung der Viskosität erfolgte nach der in DIN 53019 beschriebenen Methode.

Die Emulsionspolymerisation zur Herstellung der Vinylchloridcopolymerisate erfolgt in Gegenwart von Wasser, Initiator - üblicherweise Natriumperoxidisulfat - und sonstigen Hilfsmitteln wie Natriumsulfonaten mit 10 bis 16 C-Atomen, in üblichen Mengen. Die Polymerisationsapparatur besteht aus einem Rührreaktor, es wird unter intensiver Durchmischung der Reaktanden, bevorzugt bei Temperaturen von 50 bis 70°C, copolymerisiert. Nach Beendigung der Copolymerisation kann das Copolymerisat nach üblichen Verfahren gefällt, filtriert, gewaschen und getrocknet.

Die Lösungspolymerisation erfolgt zweckmäßigerweise in 50 gew.%iger Konzentration in einem Lösungsmittel wie Ethylacetat mit organischen Initiatoren wie tert.-Butylperoctoat bei 40 bis 70°C.

Es ist ein Vorteil der erfindungsgemäßen Vinylchloridcopolymerisate, daß diese eine hervorragende Vergilbungsresistenz ohne die Nachteile des "Weißanlaufens" bei der Wasserlagerung der Filme aufweisen.

Die erfindungsgemäßen Vinylchlorid-Glycidylmethacrylat-Copolymerisate können zur Herstellung von Bindemitteln für Lacke angewendet werden. In den Beispielen und Vergleichsbeispielen ist die vorliegende Erfindung näher erläutert.

### Vergleichsbeispiel A

Ein Copolymerisat aus 80 Gew.-Teilen Vinylchlorid, 10 Gew.-Teilen Maleinsäuredimethylester und 10 Gew.-Teilen Maleinsäurediethylester wurde nach dem Verfahren der Emulsionspolymerisation hergestellt, das Copolymerisat gefällt, filtriert, gewaschen, mit Soda nachstabilisiert und getrocknet.

Die Viskosität einer 20 gew.-%igen Lösung in Methylethylketon/Toluol (1:1) bei 23°C betrug 97 mPa·s.

Die Wärmestabilität zeigte nach 2 Stunden bei 100°C eine Farbzahl von 200 nach der Jodskala.

Der Weißanlauftest nach 8-tägiger Wasserlagerung wurde nach einer von 1 (sehr gut) bis 5 (schlecht) reichenden Skala mit 5 beurteilt.

### Beispiel 1

Ein Copolymerisat aus 76,2 Gew.-Teilen Vinylchlorid, 9,5 Gew.-Teilen Maleinsäuredimethylether, 9,5 Gew.-Teilen Maleinsäurediethylester und 4,8 Gew.-Teilen Glycidylmethacrylat wurde, wie im Vergleichsbeispiel A beschrieben, hergestellt.

Die Viskosität einer 20 gew.-%igen Lösung in Methylethylketon/Toluol (1:1) bei 23°C betrug 80 mPa·s.

Die Wärmestabilität zeigte nach 2 Stunden bei 100°C eine Farbzahl von 15 nach der Jodskala. Der Weißanlauftest nach 8-tägiger Wasserlagerung wurde nach einer von 1 (sehr gut) bis 5 (schlecht) reichenden Skala mit 1 beurteilt.

### Vergleichsbeispiel B

Ein Copolymerisat aus 75 Gew.-Teilen Vinylchlorid und 25 Gew.-Teilen Vinylisobutylether wurde nach dem Verfahren der Emulsionspolymerisation hergestellt, das Copolymerisat gefällt, filtriert, gewaschen und getrocknet.

Die Viskosität einer 20 gew.-%igen Lösung in Toluol, gemessen bei 23°C mit einem Drage-Strukturviskosimeter Typ STVK, Meßsystem A 111 betrug 24 mPa.s.

Die Wärmestabilität zeigte nach 12 Stunden bei 125°C eine Farbzahl von 1000 nach der Jodfarbskala. Der Weißanlauftest nach 8-tägiger Wasserlagerung wurde nach einer von 1 (sehr gut) bis 5 (schlecht) reichenden Skala mit 1 beurteilt.

### Vergleichsbeispiel C

Ein Copolymerisat nach dem Vergleichsbeispiel B wurde hergestellt und nach der Filtration mit verdünnter Natronlaugelösung stabilisiert. Anschließend wurde es getrocknet, der NaOH-Gehalt wurde mit 0,2 Gew.-% bestimmt. Die Viskosität einer 20 gew.-%igen Lösung in Toluol, gemessen bei 23°C mit einem Drage-Strukturviskosimeter Typ STVK, Meßsystem A 111 betrug 26 mPa.s.

Die Wärmestabilität zeigte nach 12 Stunden bei 125°C eine Farbzahl von 70 nach der Jodfarbskala. Der Weißanlauftest nach 8-tägiger Wasserlagerung wurde nach einer von 1 (sehr gut) bis 5 (schlecht) reichenden Skala mit 5 beurteilt.

### Beispiel 2

Ein Copolymerisat aus 72 Gew.-Teilen Vinylchlorid, 24 Gew.-Teilen Vinylisobutylether und 4 Gew.-Teilen Glycidylmethacrylat wurde nach dem Verfahren Vergleichsbeispiel B hergestellt.

Die Viskosität einer 20 gew.-%igen Lösung in Toluol, gemessen bei 23°C mit einem Drage-Strukturviskosimeter Typ STVK, Meßsystem A 111 betrug 24 mPa·s.

Die Wärmestabilität zeigte nach 12 Stunden bei 125°C eine Farbzahl von 3 nach der Jodfarbskala. Der Weißanlauftest nach 8-tägiger Wasserlagerung wurde nach einer von 1 (sehr gut) bis 5 (schlecht) reichenden Skala mit 1 beurteilt.

### Vergleichsbeispiel D

Ein Copolymerisat aus 77,5 Gew.-Teilen Vinylchlorid und 22,5 Gew.-Teilen Maleinsäurediisobutylester wurde in an sich üblicher Weise nach dem Verfahren der Emulsionspolymerisation hergestellt, das Copolymerisat gefällt, filtriert, nachstabilisiert und getrocknet. Die Viskosität einer 20 gew.-%igen Toluollösung bei 23°C betrug 95 mPa·s.

Die Wärmestabilität zeigte nach 2 Stunden bei 100°C eine Farbzahl von 300 nach der Jodskala. Der Weißanlauftest nach 8-tägiger Wasserlagerung wurde nach einer von 1 (sehr gut) bis 5 (schlecht) reichenden Skala mit 5 beurteilt.

### Beispiel 3

Ein Copolymerisat aus 76 Gew.-Teilen Vinylchlorid, 22 Gew.-Teilen Maleinsäurediisobutylester und 2 Gew.-Teilen Glycidylmethacrylat wurde nach dem Verfahren der Emulsionspolymerisation hergestellt, das Copolymerisat gefällt, filtriert, gewaschen und getrocknet.

Die Viskosität einer 20 gew.-%igen Toluollösung bei 23°C betrug 76 mPa·s. Die Wärmestabilität zeigte nach 2 Stunden bei 100°C eine Farbzahl von 15 nach der Jodskala. Der Weißanlauftest nach 8-tägiger Wasserlagerung wurde nach einer von 1 (sehr gut) bis 5 (schlecht) reichenden Skala mit 1 beurteilt.

## Patentansprüche (Patentansprüche für folgende(n) Vertragsstaat(en): BE, CH, FR, DE, GB, IT, LI, NL)

1. Vinylchloridcopolymerisate aus (a) 60 bis 78 Gew.-Teilen Vinylchlorid, (b) 1 bis 20 Gew.-Teilen Glycidylmethacrylat und (c) 12 bis 40 Gew.-Teilen mit (a) und (b) copolymerisierbaren Verbindungen, ausgewählt aus der Gruppe der Acrylsäure- oder Methacrylsäureester, Vinylcarbonsäureester, Vinylether, Vinyllactame, Maleinsäureester oder Fumarsäureester oder Gemischen dieser Monomeren, und mit Viskositätswerten der Copolymerisate - gemessen in 20 gew.-%iger Toluollösung bei 23°C - von 10 bis 100 mPa·s.

2. Verfahren zur Herstellung von Vinylchloridpolymerisaten gemäß Anspruch 1 mit hoher Vergilbungsresistenz durch Emulsions- oder Lösungspolymerisation, dadurch gekennzeichnet, daß
a) 60 - 78 Gew.-Teile Vinylchlorid mit
b) 1 - 20 Gew.-Teilen Glycidylmethacrylat und
c) 12 - 40 Gew.-Teile mit Vinylchlorid und Glycidylmethacrylat copolymerisierbaren Verbindungen, ausgewählt aus der Gruppe der Acrylsäure- oder Methacrylsäureester, Vinylcarbonsäureester, Vinylether, Vinyllactame, Maleinsäureester oder Fumarsäureester oder Gemischen dieser Monomeren,
copolymerisiert werden und Viskositätswerte der Copolymerisate - gemessen in 20 gew.-%iger Toluollösung bei 23°C - von 10 bis 100 mPa·s erhalten werden.

3. Verwendung der Vinylchloridcopolymerisate nach Anspruch 1 zur Herstellung von Lackbindemitteln.

## Patentansprüche (Patentansprüche für folgende(n) Vertragsstaat(en): ES)

1. Verfahren zur Herstellung von Vinylchloridcopolymerisaten mit hoher Vergilbungsresistenz durch Emulsions- oder Lösungspolymerisation, dadurch gekennzeichnet, daß
a) 60 - 78 Gew.-Teile Vinylchlorid mit
b) 1 - 20 Gew.-Teilen Glycidylmethacrylat und
c) 12 - 40 Gew.-Teile mit Vinylchlorid und Glycidylmethacrylat copolymerisierbaren Verbindungen, ausgewählt aus der Gruppe der Acrylsäure- oder Methacrylsäureester, Vinylcarbonsäureester, Vinylether, Vinyllactame, Maleinsäureester oder Fumarsäureester oder Gemischen dieser Monomeren,
copolymerisiert werden und Viskositätswerte der Copolymerisate - gemessen in 20 gew.-%iger Toluollösung bei 23°C - von 10 bis 100 mPa·s. werden.

2. Verwendung der nach dem Verfahren gemäß Anspruch 1 erhaltenen Vinylchloridcopolymerisate zur Herstellung von Bindemitteln auf dem Lackgebiet.

## Claims (Claims for the following Contracting State(s): BE, CH, FR, DE, GB, IT, LI, NL)

1. Vinyl chloride copolymers of (a) 60 to 78 parts by weight of vinyl chloride, (b) 1 to 20 parts by weight of glycidyl methacrylate and (c) 12 to 40 parts by weight of compounds copolymerizable with (a) and (b) selected from the group of the acrylic or methacrylic esters, vinyl carboxylates, vinyl ethers, vinyllactams, maleic esters or fumaric esters or mixtures of these monomers, and with viscosity values of the copolymers - measured in 20% strength by weight toluene solution at 23°C - from 10 to 100 mPa.s.

2. A process for producing vinyl chloride polymers as claimed in claim 1 with high yellowness resistance by emulsion or solution polymerization, characterized in that
a) 60 - 78 parts by weight of vinyl chloride are copolymerized with
b) 1 - 20 parts by weight of glycidyl methacrylate and
c) 12 - 40 parts by weight of compounds copolymerizable with vinyl chloride and glycidyl methacrylate selected from the group of the acrylic or methacrylic esters, vinyl carboxylates, vinyl ethers, vinyllactams, maleic esters or fumaric esters or mixtures of these monomers,
and viscosity values of the copolymers - measured in 20% strength by weight toluene solution at 23°C - from 10 to 100 mPa.s are obtained.

3. The use of the vinyl chloride copolymers of claim 1 for producing binders for coatings.

## Claims (Claims for the following Contracting State(s): ES)

1. A process for producing vinyl chloride copolymers with high yellowness resistance by emulsion or solution polymerization, characterized in that
a) 60 - 78 parts by weight of vinyl chloride are copolymerized with
b) 1 - 20 parts by weight of glycidyl methacrylate and
c) 12 - 40 parts by weight of compounds copolymerizable with vinyl chloride and glycidyl methacrylate selected from the group of the acrylic or methacrylic esters, vinyl carboxylates, vinyl ethers, vinyllactams, maleic esters or fumaric esters or mixtures of these monomers,
and viscosity values of the copolymers - measured in 20% strength by weight toluene solution at 23°C - from 10 to 100 mPa.s are obtained.

2. The use of the vinyl chloride copolymers obtained by the process of claim 1 for producing binders in the field of coatings.

## Revendications (Revendications pour l'(les) Etat(s) contractant(s) suivant(s): BE, CH, FR, DE, GB, IT, LI, NL)

1. Copolymères de chlorure de vinyle, composés de: (a) 60 à 78 parties en poids de chlorure de vinyle, (b) 1 à 20 parties en poids de méthacrylate de glycidyle et (c) 12 à 40 parties en poids de composés copolymérisables avec (a) et (b), choisis dans le groupe des esters de l'acide acrylique ou de l'acide méthacrylique, des esters d'acide vinylcarboxylique, des oxydes de vinyle, des vinyllactames, des esters d'acide maléique, des esters d'acide fumarique ou de mélanges de ceux-ci, ces copolymères ayant des valeurs de viscosité - mesurées sur une solution à 20% en poids dans du toluène à 23°C - de 10 à 100 mPa.s.

2. Procédé de préparation de copolymères de chlorure de vinyle selon la revendication 1 à résistance élevée au jaunissement, par polymérisation en émulsion ou en solution, caractérisé en ce que
a) 60-78 parties en poids de chlorure de vinyle sont copolymérisées avec
b) 1-20 parties en poids de méthacrylate de glycidyle et
c) 12-40 parties en poids de composés copolymérisables avec le chlorure de vinyle et le méthacrylate de glycidyle, choisis dans le groupe des esters de l'acide acrylique ou de l'acide méthacrylique, des esters d'acide vinylcarboxylique, des oxydes de vinyle, des vinyllactames, des esters d'acide maléique, des esters d'acide fumarique ou de mélanges de ces monomères,
et des valeurs de viscosité des copolymères - mesurées sur une solution à 20% en poids dans du toluène à 23°C - de 10 à 100 mPa.s sont obtenues.

3. Utilisation des copolymères de chlorure de vinyle selon la revendication 1 pour la préparation de liants pour vernis.

## Revendications (Revendications pour l'(les) Etat(s) contractant(s) suivant(s): ES)

1. Procédé de préparation de copolymères de chlorure de vinyle à résistance élevée au jaunissement, par polymérisation en émulsion ou en solution, caractérisé en ce que
a) 60-78 parties en poids de chlorure de vinyle sont copolymérisées avec
b) 1-20 parties en poids de méthacrylate de glycidyle et
c) 12-40 parties en poids de composés copolymérisables avec le chlorure de vinyle et le méthacrylate de glycidyle, choisis dans le groupe des esters de l'acide acrylique au de l'acide méthacrylique, des esters d'acide vinylcarboxylique, des oxydes de vinyle, des vinyllactames, des esters d'acide maléique, des esters d'acide fumarique ou de mélanges de ces monomères,
et des valeurs de viscosité des copolymères - mesurées sur une solution à 20% en poids dans du toluène à 23°C - de 10 à 100 mPa.s sont obtenues.

2. Utilisation des copolymères de chlorure de vinyle obtenus par le procédé selon la revendication 1 pour la préparation de liants dans le secteur des vernis.
